# EUROPEAN PATENT APPLICATION

(11) **EP 2 453 171 A1**
(43) Date of publication of application: **16.05.2012**
(21) Application number: 10797177.2
(22) Date of filing: 08.07.2010
(51) Int. Cl.: F22B 3/00, F22B 33/18, F24J 2/42

(54) **VAPOR SUPPLY DEVICE**

(30) Priority: 10.07.2009 JP 2009163385
(71) Applicant: IHI Corporation, Tokyo 135-8710 (JP)
(72) Inventor: MATSUNO Shinsuke, Tokyo 135-8710 (JP); MIYOSHI Kazuo, Tokyo 135-8710 (JP); OTSUKA Hiroyuki, Tokyo 135-8710 (JP)
(74) Representative: Lamb, Martin John Carstairs
(86) International application number: PCT/JP2010/061628
(87) International publication number: WO 2011/004866

(57) **Abstract**

In this steam supply apparatus, a steam inlet (20a) of a steam injector (20) is connected to a steam outlet (19a) of a high-pressure steam-generating boiler (19). A solar heat-collector (22) is connected to an inlet port (20b) of the steam injector (20), and steam-utilizing equipment (25) is connected to a discharging port (20c). The steam injector (20) is driven by high-pressure and high-temperature steam (27) generated by the high-pressure steam-generating boiler (19), and pressure of the inlet port (20b) is decreased. In the inner portion of the solar heat-collector (22) which is decompressed according to a decrease in pressure of the inlet port (20b), water with a temperature increased by irradiation of the sunlight (24) is boiled and evaporated at less than 100°C, and low-pressure and low-temperature steam (28) is generated. The steam (28) is introduced to the steam injector (20), mixed with the high-pressure and high-temperature steam (27) generated by the high-pressure steam-generating boiler (19), and intermediate pressure and intermediate temperature steam (27a) is generated. The amount of generated steam in the high-pressure steam-generating boiler (19) is decreased by supplying the steam (27a) to the steam-utilizing equipment (25).

## Description

### [Technical Field]

The present invention relates to a steam supply apparatus. More particularly, the invention relates to a steam supply apparatus which is used for supplying steam (process steam) used in factories, buildings, or the like.
Priority is claimed on Japanese Patent Application No. 2009-163385, filed July 10, 2009, the content of which is incorporated herein by reference.

### [Technical Background]

When steam-utilizing equipment which uses steam (water vapor) or heat thereof in factories, buildings, and the like is used, in general, boilers such as small-sized once-through boilers are widely used as a supply source of the steam (process steam).

In the steam-utilizing equipment used in factories, buildings, and the like, there are various pressure or temperature conditions which are required of steam to be supplied according to the intended purpose thereof. However, generally, the steam-generating capability of the boiler does not correspond to pressure or temperature conditions of the steam which are required by each piece of steam-utilizing equipment, and many boilers are manufactured according to general-purpose standards. In the general-purpose standards, in consideration of regulations or the like according to the law, for example, the boiler generates steam at about a maximum pressure (gauge pressure) of 1 MPa and a temperature of about 180°C. That is, the boiler is regulated so as to generate the steam having certain constant temperature or pressure conditions.

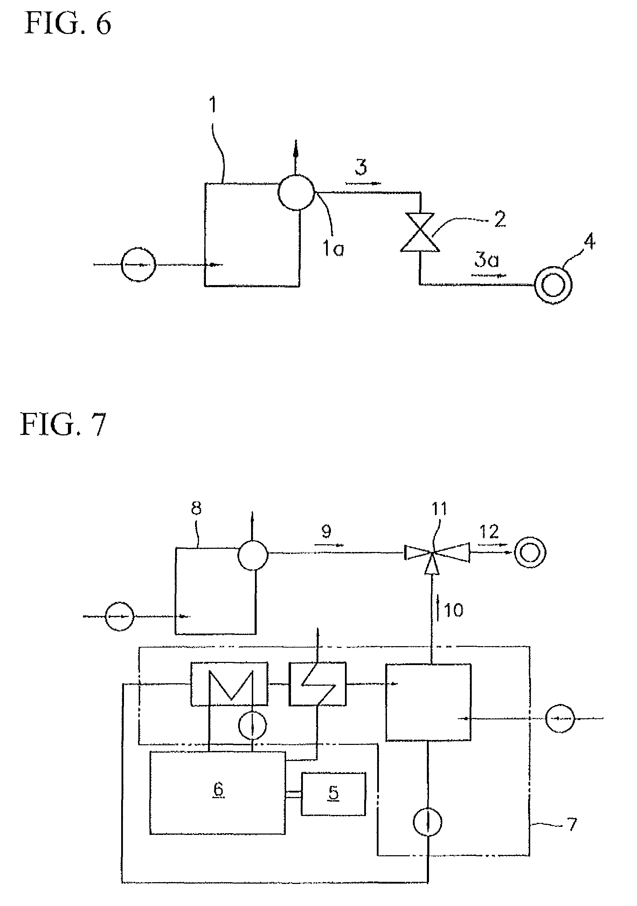

Thereby, when steam is supplied to the steam-utilizing equipment which is used in factories, buildings, and the like, in the related art, a boiler having standards exceeding the pressure or temperature conditions of steam required in the steam-utilizing equipment has been used. After the pressure and temperature of the steam generated in the boiler have decreased to the predetermined pressure and temperature conditions required in the steam-utilizing equipment, the steam is supplied to the steam-utilizing equipment. FIG. 6 shows an example of the steam supply methods used in the related art. In the steam supply method of the related art, as shown in FIG. 6, a necessary decompression valve 2 is connected to the downstream side of a steam outlet 1a in a boiler 1. Steam 3 generated in the steam boiler 1 of about 1 MPa and about 180°C, for example, is appropriately decompressed through a decompression valve 2, and for example, the pressure and temperature of the steam are decreased to the pressure and temperature which match the predetermined pressure and temperature conditions of 0.2 MPa and 130°C or the like required in the steam-utilizing equipment 4. The steam 3a (process steam) with decreased pressure and temperature is supplied to the steam-utilizing equipment 4.

In addition, as a method for generating a process steam in factories or the like, in the related art, the method shown in FIG. 7 is suggested (for example, refer to Patent Document 1). In the method for generating the process steam shown in FIG. 7, a generator 5, an internal combustion engine 6 for driving the generator 5, a steam-generating portion 7 which recovers heat exhausted from the internal combustion engine 6 and generates steam, a steam-generating boiler 8, and an ejector (injector) 11 which uses high-pressure steam 9 generated in the steam-generating boiler 8 as a driving stream and which uses low-pressure steam 10 generated in the steam-generating portion 7 as a secondary stream are used. The low-pressure steam 10 is generated at the steam-generating portion 7 by recovering the exhaust heat of the internal combustion engine 6 when the generator 5 is driven and power is generated. The low-pressure steam 10 is sucked into the ejector 11 and mixed with the high-pressure steam 9 from the steam-generating boiler 8. Process steam 12 is generated from the mixture of the low-pressure steam 10 and the high-pressure steam 9.

As a method of generating low-pressure steam by using the exhaust heat of an engine, other than the above-described method, an evaporative cooling engine for cogeneration is suggested in Patent Document 2. In the evaporative cooling engine suggested in Patent Document 2, high-pressure steam is generated by heat exchange between the exhaust gas of a gas engine and water. A steam ejector is disposed in a high-pressure steam line in which the high-pressure steam is transported. The steam ejector is connected to a jacket portion which is installed in the outer peripheral portion of the engine. A water supply pipe is connected to the jacket portion and engine cooling water is supplied. The temperature of the engine cooling water supplied to the jacket portion is increased by cooling the engine. If the high-pressure steam passes through the steam ejector, the steam ejector assumes a negative pressure, and the inner portion of the jacket portion which is connected to the steam ejector assumes a decompression state which is equal to or less than the atmospheric pressure. If the inner portion of the jacket portion is in a decompression state, cooling water with an increased temperature by cooling the engine will evaporate, and become steam. The cooling water steam is sucked into the steam ejector and mixed with the high-pressure steam, and intermediate pressure steam is generated.

Moreover, in Patent Document 3, a method of enhancing overall efficiency in a cogeneration system is suggested. In the method suggested in Patent Document 3, intermediate pressure steam is generated by a method similar to that of the evaporative cooling engine which is suggested in Patent Document 2. That is, high-pressure steam is generated through a waste-heat steam boiler by using waste-heat of a reciprocating engine. The high-pressure steam generated by the waste-heat steam boiler is supplied to a steam ejector. The steam ejector is connected to a decompression evaporator. Warm water, which is obtained by performing heat exchange with the cooling water cooling the reciprocating engine, is supplied to the decompression evaporator. If the high-pressure steam passes through the steam ejector, the steam ejector assumes a negative pressure and the inner portion of the decompression evaporator connected to the steam ejector is decompressed. If the inner portion of the decompression evaporator assumes a decompression state, the warm water supplied into the decompression evaporator is evaporated and becomes steam. The water vapor of the warm water is sucked into the steam ejector, mixed with the high-pressure steam, and generates an intermediate steam.

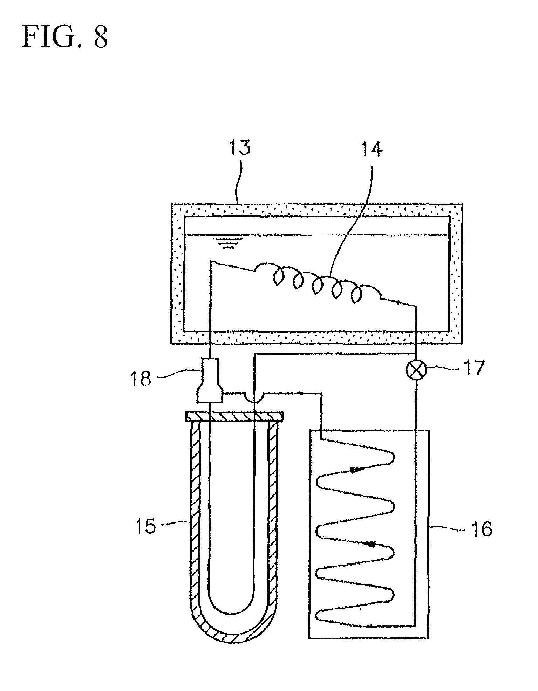

In the methods suggested in Patent Documents 1 to 3, exhaust heat of the internal combustion engine, such as the engine, is used as the heat source for generating the low-pressure steam. Here, as the heat source for generating the low-pressure steam, using natural energy such as solar heat is considered. As equipment which uses the solar heat as the heat source, a solar water heater is suggested in the related art (for example, refer to Patent Document 4). An example of the solar water heater is shown in FIG. 8. The solar water heater shown in FIG. 8 includes a storage tank 13, a heat exchanger 14 which is installed in the inner portion of the storage tank 13, and a high-temperature heat-collector 15 and a low-temperature heat-collector 16 for generating steam by a heating medium in the lower side of the storage tank 13. A pipe of an outlet of the heat exchanger 14 is divided into two directions: one side is connected to an inlet of the high-temperature heat-collector 15 and the other side is connected to an inlet of the low-temperature heat-collector 16 via an expansion means 17. An inlet of an ejector 18 (injector) is connected to the outlet of the high-temperature heat-collector 15. An inlet port for the low-pressure generation of the ejector 18 is connected to the outlet of the low-temperature heat-collector 16. In addition, the outlet of the ejector 18 is connected to the inlet of the heat exchanger 14.

In the solar water heater shown in FIG. 8, in general, the liquefied heating medium is accumulated at the lower portion of the high-temperature heat-collector 15 by the liquefied heating medium's own weight. If the solar water heater is irradiated with sunlight, the heating medium is evaporated at the high-temperature heat-collector 15. Then, the heating medium becomes high-temperature and high-pressure steam, and flows into the ejector 18. If the high-temperature and high-pressure steam flows into the ejector 18, the low-temperature heat-collector 16 connected to the inlet port of the ejector 18 is decompressed, and the steam in the inner portion of the heat-collector 16 is sucked into the ejector 18. The steam sucked into the ejector 18 is mixed with the high-temperature and high-pressure steam which is generated at the high-temperature heat-collector 15. The mixed steam stream enters the heat exchanger 14 via the outlet of the ejector 18, and is condensed and liquefied. The heat of condensation generated at this time increases the temperature of the water in the storage tank 13, and the heat is stored.

### [Documents of the prior art]

### [Patent Documents]

[Patent Document 1] Japanese Unexamined Patent Application, First Publication No. S59-196956
[Patent Document 2] Japanese Patent (Granted) Publication No. 2942851
[Patent Document 3] Japanese Unexamined Patent Application, First Publication No. 2002-4943
[Patent Document 4] Japanese Examined Patent Application, Second Publication No. S63-13113

### [Disclosure of the Invention]

### [Problems to be Solved by the Invention]

The boiler which is used for generating steam (process steam) supplied to the steam-utilizing equipment used in factories, buildings, or the like generates the steam by combustion of fossil fuels. That is, since fossil fuels are burnt for performing low-temperature heating in which steam of a temperature of about 100°C to 200°C is obtained, it is difficult to enhance energy efficiency.

Therefore, it is preferable to suppress fuel consumption in the boiler used as the steam-generating apparatus while supplying the required amount of steam (process steam) at the pressure and the temperature which are matched to predetermined pressure and temperature conditions required in the steam-utilizing equipment which is used in factories, buildings, or the like. Thereby, it is preferable to improve reduction of operating costs of the steam-generating apparatus and further decrease CO₂ exhaust amount.

However, as shown in FIG. 6, steam (process steam) 3a having decreased pressure and temperature is supplied to the steam-utilizing equipment, after the pressure and temperature of steam 3 generated by the boiler 1 are decreased to the pressure and temperature corresponding to predetermined pressure and temperature conditions required in the steam-utilizing equipment 4 which is the usage destination, via the decompression valve 2. In this method, energy corresponding to differences between the pressure and temperature of steam generated by a small-sized boiler 1 and a predetermined pressure and temperature of the steam (process steam) 3a obtained after the pressure and temperature are decreased by the decompression valve 2 is wasted.

In the method for generating the process steam in factories or the like as shown in FIG. 7, the steam-generating portion 7 which recovers the exhaust heat of the internal combustion engine 6 for driving the generator 5 and generates the low-pressure steam 10 is essential. Thereby, there is a problem in that the method can only be applied to factories or the like in which exhaust heat which can be used for steam generation is discharged.

In the methods suggested in Patent Document 2 or the Patent Document 3, the low-pressure steam is generated by the decompression effect when the high-pressure steam passes through the steam ejector, the high-pressure steam and the low-pressure steam are mixed with each other, and the intermediate pressure steam is generated. Thereby, there is an advantage in that steam-generating efficiency with respect to the heat source is improved. However, the methods are all intended for improving the efficiency of the cogeneration system. Therefore, there is a problem in that the methods can only be applied to factories or the like which use the cogeneration system. Moreover, in the methods suggested in Patent Document 2 or the Patent Document 3, the high-pressure steam is generated by the exhaust heat of the gas engine or the reciprocating engine. Therefore, the generating efficiency of the high-pressure steam is intrinsically lower compared to that of the boiler. In addition, if the methods are only used for supplying steam, the operating costs or the CO₂ exhaust amount is increased, which does not contribute to solving the problems.

Moreover, the solar water heater shown in FIG. 8 obtains warm water by increasing the temperature of the water in the storage tank 13 by using CFC or the like as the heating medium. However, the solar water heater cannot generate steam which can be supplied to a variety of steam-utilizing equipment types used in factories, buildings, or the like. In addition, since a heat-collector of complicated configuration, such as a vacuum tube type heat-collector or a plate-shaped heat collector having a double transmissive body, needs to be used as the high-temperature heat-collector 15, there is a problem in that the costs increase.

Moreover, water can be heated to 100°C or more by using solar heat as the heat source. However, in this case, it is important to prevent heat of the water, which is heated by absorbing solar heat, from being diffused into the atmosphere. Thereby, since an advanced insulation configuration is needed in the heat-collector, there are problems in that the configuration of the heat-collector is complicated and the costs increase.

Moreover, in the solar water heater, the heat quantity which can be obtained is highly dependent on the weather. Thereby, in a case where solar heat is used as the heat source in factories or the like, a backup heat source which can supply 100% of the heat quantity required by factories or the like even on days without sunshine is additionally needed. Therefore, there is a problem in that the equipment costs increase.

The present invention provides a steam supply apparatus capable of supplying a required amount of steam (process steam) at a pressure and temperature which match required predetermined pressure and temperature conditions to a variety of steam-utilizing equipment used in usage destinations such as factories and buildings in which exhaust heat for use in steam generation is not generated, and is capable of reducing the equipment costs and the operating costs.

### [Means for Solving the Problem]

According to the first aspect of the present invention, a steam supply apparatus related to the present invention includes: a steam-generating device; a steam injector in which a steam inlet is connected to a steam outlet of the steam-generating device; a heat-collector which is connected to an inlet port of the steam injector, stores water therein, and increases the temperature of the water by natural energy; and steam-utilizing equipment which is connected to a discharging port of the steam injector, wherein the steam injector is driven by steam which is generated by the steam-generating device, pressure in the heat-collector is decreased by driving the steam injector and steam is generated in the heat-collector, and steam which is supplied from the steam-generating device and steam which is generated in the heat-collector are mixed by the steam injector and supplied to the steam-utilizing equipment.

According to the second aspect of the present invention, the steam-generating device has a capability to supply an entire amount of steam required by the steam-utilizing equipment.

According to the third aspect of the present invention, the steam-generating device is a high-pressure steam-generating boiler.

According to the fourth aspect of the present invention, the heat-collector is a solar heat-collector.

According to the fifth aspect of the present invention, the solar heat-collector is a closed-loop type which circulates a heating medium whose temperature is increased by absorbing solar heat, and the temperature of the water stored in an inner portion of the solar heat-collector is increased by circulating the heating medium.

### [Effects of the Invention]

The steam supply apparatus according to the present invention shows improved effects such as the following.

(1) The steam supply apparatus according to the present invention includes: the steam-generating device; the steam injector in which the steam inlet is connected to the steam outlet of the steam-generating device; the heat-collector which is connected to the inlet port of the steam injector, stores water therein, and increases the temperature of the water by natural energy; and the steam-utilizing equipment which is connected to the discharging port of the steam injector. The steam injector is driven by steam which is generated by the steam-generating device. Pressure in the heat-collector is decreased by driving the steam injector and steam is generated in the heat-collector. Steam which is supplied by the steam-generating device and steam which is generated in the heat-collector are mixed by the steam injector and supplied to the steam-utilizing equipment. Thereby, the amount of steam which is generated by the steam-generating device can be less than the amount of steam which is required by the steam-utilizing equipment. Reduction in operating costs of the steam-generating device can be improved when supplying the steam corresponding to the required amount for the steam-utilizing equipment.

(2) Even when steam-utilizing equipment is in factories, buildings and the like in which exhaust heat to be used for steam generation is not generated, it is possible to supply the required amount of steam at a pressure and temperature corresponding to the pressure and the temperature conditions which are required by the steam-utilizing equipment.

(3) It is preferable that the heat-collector satisfy the following conditions in order to be able to boil and evaporate the stored water by decompression. That is, the heat collector is able to: (i) store water; (ii) be strong enough not to be deformed even when the pressure of the inner portion thereof is decreased; and (iii) collect the heat, which is lost as evaporation heat when the water is evaporated, through heat exchange with the ambient environment. Thereby, a complicated configuration or an advanced insulation configuration is not needed in the heat-collector, and the costs necessary for the heat-collector can be reduced.

(4) The steam-generating device included in the steam supply apparatus according to the present invention has a capability to supply an entire amount of steam required by the steam-utilizing equipment connected to the discharging side of the steam injector. Thereby, when heat exchange with the ambient environment is not expected at the heat-collector due to influences, such as the weather, and the amount of steam generated in the heat-collector is decreased, the entire required amount of steam can be easily supplied by increasing the amount of steam generated by the steam-generating device. Therefore, backup steam-generating equipment is not additionally needed, and an effect of reducing equipment costs can be anticipated.

(5) Therefore, it is possible to improve reduction of the equipment costs and the operating costs which are needed when supplying the steam (process steam) used in factories, buildings, or the like.

(6) According to the configuration in which the steam-generating device is a high-pressure steam-generating boiler, the configuration of a steam supply apparatus having the above-described effects (1), (2), (3), (4), and (5) can be easily realized.

(7) By making the heat-collector a solar heat-collector, the temperature of the water in the inner portion of the solar heat-collector can be increased when the solar heat-collector is irradiated with sunlight. Thereby, in the inner portion of the solar heat-collector which is decompressed when the steam injector is operated, the water whose temperature is increased can be efficiently boiled and evaporated, and a large amount of steam can be generated. The steam generated by the solar heat-collector is introduced into the steam injector, and large amounts of the steam can be mixed with the steam which is generated by the steam-generating device. In this way, when an amount of steam corresponding to the required amount of the desired steam-utilizing equipment is supplied, the amount of steam generated in the steam-generating device can be further decreased. Thereby, fuel consumption of the steam-generating device can be further decreased, and the operating costs can be further reduced.

(8) Due to the fact that the solar heat-collector has a closed-loop type configuration in which the temperature of water stored in the inner portion of a evaporator is increased by using circulation of a heating medium whose temperature is increased by absorbing solar heat, it is possible to divide the solar heat collection function and the evaporation function in the solar heat-collector. Thereby, a portion in which the heating medium absorbs the solar heat can be optimally designed into the solar heat collection function, and the evaporator can be optimally designed into the evaporation function. Moreover, since the solar heat-collector is the closed-loop type, water is not directly evaporated at the portion where the heating medium absorbs the solar heat. Thereby, possibility of scale-generation at the portion can be prevented, and places where scale-generation may be expected can be limited to the evaporator. Therefore, the evaporator can be designed in advance so as to simplify the performance of maintenance during occurrence of scaling, and an effect of decreased labor required for maintenance during the occurrence of scaling can be anticipated.

### [Brief description of the drawings]

[FIG. 1] FIG. 1 is a schematic diagram showing an embodiment of a steam supply apparatus of the present invention.
[FIG. 2] FIG. 2 is a schematic diagram showing another embodiment of the present invention.
[FIG. 3] FIG. 3 is a schematic diagram showing still another embodiment of the present invention.
[FIG. 4] FIG. 4 is a diagram showing an example of operating results of the steam supply apparatus related to the embodiments of the present invention.
[FIG. 5] FIG. 5 is a diagram showing results of a performance prediction simulation of the steam supply apparatus related to the embodiments of the present invention.
[FIG. 6] FIG. 6 is a diagram showing an outline of an example of the steam supply method in the related art.
[FIG. 7] FIG. 7 is a schematic diagram showing a method for generating process steam in factories or the like which is suggested in the related art.
[FIG. 8] FIG. 8 is a schematic diagram showing an example of the solar water heater which is suggested in the related art.

### [Embodiments for Implementing the Invention]

Hereinafter, forms for embodying the present invention will be described with reference to the drawings.

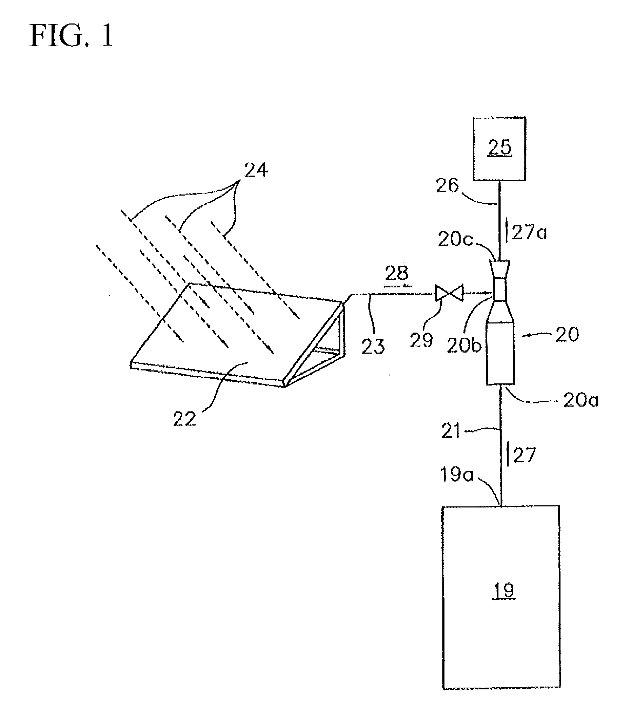

FIG. 1 shows an embodiment of a steam supply apparatus of the present invention.

A steam inlet 20a of a steam injector 20 is connected to a steam outlet 19a of a high-pressure steam-generating boiler 19 which is a steam-generating device to generate high-pressure and high-temperature steam, via a steam line 21.

A solar heat-collector 22 as a heat-collector for increasing the temperature of water by heat of the ambient environment, is connected to an inlet port 20b of the steam injector 20 via a suction line 23. In the solar heat-collector 22, a hollow container whose shape can be maintained even when the inner portion thereof is decompressed, is placed so as to be exposed to sunlight 24. In the solar heat-collector 22, water can be stored in the container, and if the container is irradiated with the sunlight 24, the temperature of the water stored in the container can be increased by absorbing energy which is held in the sunlight 24. From the standpoint of the function of the solar heat-collector 22 which increases the temperature of water through the energy held in the sunlight 24, it is preferable that the area which receives the sunlight 24 is as large as possible. In addition, as described hereinafter, in the solar heat-collector 22, from the standpoint of increasing efficiency when water is evaporated in the inner portion of the container which is decompressed according to the suction through the steam injector 20, it is preferable that the container have a shape in which the surface area of water stored in the inner portion of the container is as large as possible.

Steam-utilizing equipment 25 is connected to a discharging port 20c of the steam injector 20 via a steam supply line 26. As the steam-utilizing equipment 25, equipment is used which requires steam (process steam) 27a with pressure and temperature conditions lower than the pressure and the temperature of the high-pressure and high-temperature steam 27 generated by the high-pressure steam-generating boiler 19.

In other words, the high-pressure steam-generating boiler 19 has the capability to supply the entire amount of steam required by the steam-utilizing equipment 25.

In FIG. 1, a reference number 28 indicates steam which is generated by the solar heat-collector 22. In addition, a reference number 29 indicates a shut-off valve which is provided on the suction line 23.

When the steam supply apparatus related to the present embodiment is used, the solar heat-collector 22 is installed so that the solar heat-collector 22 is irradiated with the sunlight 24. Moreover, water stored in the inner portion of the solar heat-collector 22 absorbs energy of the irradiated sunlight 24 and the temperature of the water is increased.

If the high-pressure steam-generating boiler 19 is operated in the above state, the steam 27 which is generated by the high-pressure steam-generating boiler 19 is introduced from the steam outlet 19a to the steam inlet 20a of the steam injector 20 via the steam line 21. When the steam 27 which flows in from the steam inlet 20a passes through to the side of the discharging port 20c, the steam injector 20 is driven. If the steam injector 20 is driven, pressure of the inlet port 20b is decreased.

If the pressure of the inlet port 20b is decreased due to the driving of the steam injector 20, the inner portion of the solar heat-collector 22 connected to the inlet port 20b assumes a decompression (low pressure) state. If the inner portion of the solar heat-collector 22 assumes a decompression state, boiling and evaporation occur in the inner portion of the solar heat-collector 22 even when the temperature of the water with a temperature increased by the energy of the sunlight 24 is less than 100°C, which is the boiling point by one atmospheric pressure, and the steam 28 is generated. Thereby, the steam 28, which is generated in the inner portion of the decompressed solar heat-collector 22, is continuously sucked into the inlet port 20b of the steam injector 20. In the steam injector 20, the steam 27 which has a high pressure and high temperature and flows into the steam inlet 20a from the high-pressure steam-generating boiler 19 and the steam 28 which has a low pressure and low temperature and is sucked into the inlet port 20b from the solar heat-collector 22 are mixed with each other, and steam 27a which has an intermediate pressure and intermediate temperature is generated. The intermediate pressure and intermediate temperature steam 27a generated by the mixing is supplied to the steam-utilizing equipment 25 through the steam supply line 26 from the discharging port 20c, in a state where the amount of the steam 27a was increased more than the amount of the steam 27 generated by the high-pressure steam-generating boiler 19 by mixing the steam 28 generated by the solar heat-collector 22.

Therefore, the amount of the steam 27 generated by the high-pressure steam-generating boiler 19 may be smaller than the amount of steam which is required by the steam-utilizing equipment 25. Thereby, the amount of fuel which is necessary for operating the high-pressure steam-generating boiler 19 can be decreased compared to that of the case where the entire amount of steam required by the steam-utilizing equipment 25 is generated by the high-pressure steam-generating boiler 19.

Incidentally, in a case where irradiation of the sunlight 24 is not present or the irradiation amount of the sunlight 24 is small in the solar heat-collector 22 due to influences such as the weather, the temperature of water is not sufficiently increased in the solar heat-collector 22.

In this case, even when the high-pressure steam-generating boiler 19 is operated and the steam injector 20 is driven by the high-pressure and high-temperature steam 27 supplied from the high-pressure steam-generating boiler 19, boiling and evaporation of water in the inner portion of the solar heat-collector 22 which is decompressed due to the pressure decrease generated at the inlet port 20b are not sufficiently performed. Therefore, the amount of the low-pressure and low-temperature steam 28 which is sucked into the inlet port 20b of the steam injector 20 from the solar heat-collector 22, that is, the amount of the steam 28 which is mixed with the steam 27 supplied from the high-pressure steam-generating boiler 19 in the steam injector 20 is decreased.

In this case, in order to supplement the decrease of the low-pressure and low-temperature steam 28 which is sucked into the steam injector 20 from the solar heat-collector 22, the amount of the steam 27 which is generated by the high-pressure steam-generating boiler 19 may be increased by strengthening the operation of the high-pressure steam-generating boiler 19.

Moreover, in the case where irradiation of the sunlight 24 to the solar heat-collector 22 is not present at all, or in the case where an increase in temperature of water in the solar heat-collector 22 cannot be expected at all due to the winter season or the like, boiling and evaporation of water in the inner portion of the solar heat-collector 22 barely occurs even though the steam injector 20 is driven. In this case, the shut-off valve 29 on the suction line 23 is closed, and in this state, the high-pressure steam-generating boiler 19 may be operated so that the entire amount of steam required by the steam-utilizing equipment 25 is fulfilled through the steam 27 generated by the high-pressure steam-generating boiler 19.

Thereby, the steam 27 generated by the high-pressure steam-generating boiler 19 is supplied with the amount thereof corresponding to the required amount to the steam-utilizing equipment 25, in the state where the pressure and the temperature of the steam 27 are decreased according to the pressure drop when the steam 27 passes through the steam injector 20.

In this way, according to the steam supply apparatus related to the present embodiment, in the case where the solar heat-collector 22 is irradiated with the sunlight 24 and the temperature of water in the solar heat-collector 22 is increased, the amount of the steam 27 generated by the high-pressure steam-generating boiler 19 can be smaller than the amount of steam which is required by the steam-utilizing equipment 25. Thereby, fuel consumption of the high-pressure steam-generating boiler 19 can be decreased when the steam 27a corresponding to the amount required by the steam-utilizing equipment 25 is supplied, and reduction in the operating costs can be improved.

Moreover, even at factories, buildings, or the like in which exhaust heat for use in steam generation is not generated, it is possible to supply the steam 27a with a pressure and temperature which match predetermined pressure and temperature conditions required by the steam-utilizing equipment 25 according to the required amount.

It is preferable that the solar heat-collector 22 increases the temperature of water stored in the inner portion thereof by the irradiated sunlight 24 to the temperature in which the water can be boiled and evaporated when pressure of the inner portion of the solar heat-collector 22 is decreased according to the pressure decrease of the inlet port 20b due to the driving of the steam injector 20. Hereby, an advanced insulation configuration is not particularly needed. Therefore, if the solar heat-collector 22 is capable of storing water and has strength enough not to deform its shape when the inner portion thereof is decompressed, there is no need to use expensive glass or complicated configurations in manufacture. For example, a hollow panel made of resin or the like, which is reinforced by ribs disposed in parallel with the required spacing in the inner space, can be used as the solar heat-collector 22. Thereby, the cost necessary for the solar heat-collector 22 can be greatly reduced compared with that of the solar heat-collector which is generally used in the related art.

Even when the amount of steam 28 generated by the solar heat-collector 22 is decreased due to influences such as the weather or when generation of the steam 28 cannot be expected, by strengthening operation of the high-pressure steam-generating boiler 19 which originally has the capability to supply the entire amount of steam required by the steam-utilizing equipment 25, steam can be supplied to the steam-utilizing equipment 25 corresponding to the required amount. Accordingly, additional steam-generating equipment is not needed for backup.

Therefore, by adopting the steam supply apparatus related to the present embodiment for supplying steam (process steam) which is used in factories, buildings, or the like, reduction of equipment costs and operating costs can be improved.

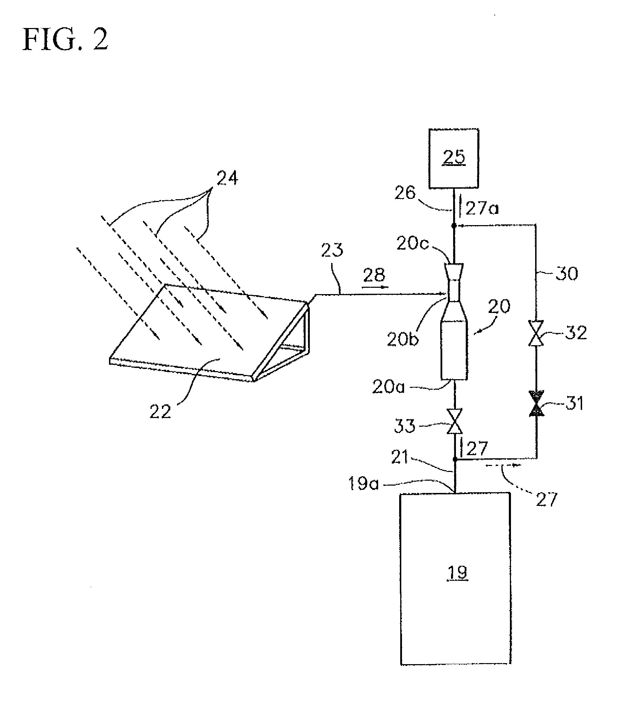

Next, an application example of the embodiment shown in FIG 1 is shown in FIG. 2 as another embodiment of the present invention. In a steam supply apparatus shown in FIG. 2, a bypass line 30, in which an on-off valve 31 and a decompression valve 32 are installed in order from the upstream side, is provided so as to be divided at a middle position of the steam line 21 which connects the steam outlet 19a of the high-pressure steam-generating boiler 19 and the steam inlet 20a of the steam injector 20. The end of the downstream side of the bypass line 30 is connected to a middle position of the steam supply line 26 which connects the discharging port 20c of the steam injector 20 and the steam-utilizing equipment.

Moreover, a shut-off valve 33 is provided further on the downstream side than the division location of the bypass line 30 in the steam line 21.

In the steam supply apparatus shown in FIG. 2, the shut-off valve 29 on the suction line 23 shown in FIG. 1 is omitted. Except for that, the configuration in FIG. 2 is similar to that shown in FIG. 1, and the same reference numbers are associated with the same parts.

When the steam supply apparatus of the present embodiment is used, the shut-off valve 33 on the steam line 21 is opened in advance. The on-off valve 31 on the bypass line 30 is closed.

In addition, the solar heat-collector 22 is irradiated with the sunlight 24. Thereby, water stored in the inner portion of the solar heat-collector 22 absorbs energy of the irradiated sunlight 24 and the temperature of the water is increased.

In this state, if the high-pressure steam-generating boiler 19 is operated, similarly to the steam supply apparatus of the embodiment of FIG. 1, the steam injector 20 is driven by the steam 27 generated by the high-pressure steam-generating boiler 19, and water with a temperature increased by the sunlight 24 is boiled and evaporated at the inner portion of the solar heat-collector 22 which is decompressed according to the pressure decrease of the inlet port 20b. The steam 28 generated at this time is continuously sucked into the inlet port 20b of the steam injector 20. The sucked steam 28 is mixed with the high-pressure and high-temperature steam 27 from the high-pressure steam-generating boiler 19 in the steam injector 20. The intermediate pressure and intermediate temperature steam 27a, which is increased in amount since the steam 28 is mixed with the steam 27, is discharged from the discharging port 20c of the steam injector 20, and supplied to the steam-utilizing equipment 25 through the steam supply line 26.

In this case, the amount of the steam 27 generated by the high-pressure steam-generating boiler 19 can be decreased to less than the amount of steam required by the steam-utilizing equipment 25. Thereby, similarly to the embodiment shown in FIG. 1, fuel consumption of the high-pressure steam-generating boiler 19 can be reduced, and reduction in the operating costs can be improved.

On the other hand, in a case where irradiation of the sunlight 24 is not present or the irradiation amount of the sunlight 24 is small in the solar heat-collector 22 due to influences such as the weather and the temperature of the water not being sufficiently increased in the solar heat-collector 22, the shut-off valve 33 on the steam line 21 is closed and the on-off valve 31 on the bypass line 30 is opened. In this state, the high-pressure steam-generating boiler 19 may be operated so that the entire amount of steam required by the steam-utilizing equipment 25 is supplied by the steam 27 generated by the high-pressure steam-generating boiler 19. Thereby, as shown by a two-dot chain line of FIG. 2, the entire amount of the steam 27 generated by the high-pressure steam-generating boiler 19 is supplied to the steam-utilizing equipment 25 through the bypass line 30 which is divided from the middle position of the steam line 21 and to which the decompression valve 32 is attached, and through the steam supply line 26. Therefore, by appropriately regulating the decompression valve 32 provided on the bypass line 30 according to conditions of the pressure and the temperature of steam required by the steam-utilizing equipment 25 in advance, the steam 27 which is reliably regulated to the pressure and the temperature matching the pressure and the temperature conditions of steam required by the steam-utilizing equipment 25 at the decompression valve 32 can be supplied to the steam-utilizing equipment 25.

Therefore, also according to the present embodiment, effects similar to the effects of the embodiment of FIG. 1 can be obtained.

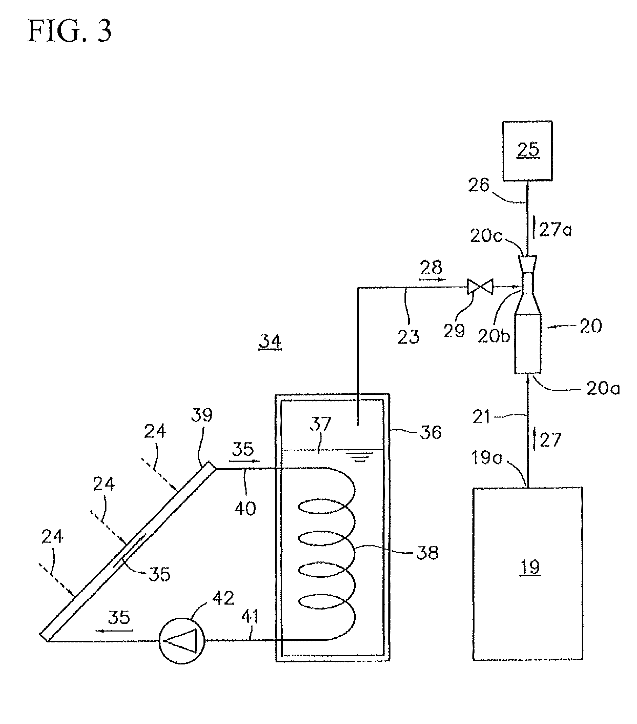

Next, another application example of the embodiment in FIG. 1 is shown in FIG. 3 as still another embodiment of the present invention. A steam supply apparatus shown in FIG. 3 is one in which the solar heat-collector 22 included in the steam supply apparatus shown in FIG. 1 is replaced by a solar heat-collector 34. The solar heat-collector 22 shown in FIG. 1 is connected to the inlet port 20b of the steam injector 20 via the suction line 23. In the solar heat-collector 22, the inner portion of the container which is installed so as be exposed to the sunlight 24 can be decompressed according to the suction through the steam injector 20. On the other hand, a solar heat-collector 34 which is included in the steam supply apparatus shown in FIG. 3 is a closed-loop type solar heat-collector which circulates a heating medium 35 with a temperature increased by absorbing solar heat and can increase the temperature of water 37 stored in an inner portion of an evaporator 36. The evaporator 36 included in the solar heat-collector 34 is connected to the inlet port 20b of the steam injector 20 via the suction line 23.

In the solar heat-collector 34, a heat-exchanging portion 38 is installed in the inner portion of the evaporator 36 which is a hollow container which can store water 37 and has strength enough not to deform its shape even when being decompressed by the suction through the steam injector 20.

Moreover, a solar heat-receiving container 39 is installed so as to be exposed to the sunlight 24 on the outer portion of the evaporator 36. The solar heat-receiving container 39 and the upper end of the heat-exchanging portion 38 in the inner portion of the evaporator 36 are connected to each other by a heating medium line 40. The solar heat-receiving container 39 and the lower end of the heat-exchanging portion 38 are connected to each other by a heating medium line 41 which includes a circulation pump 42. A closed loop, which is formed by the solar heat-receiving container 39 and the heat-exchanging portion 38 and the both heating medium lines 40 and 41, is filled with the heating medium 35.

By operating the circulation pump 42, the solar heat-collector 34 can cause the heating medium 35 to circulate through the solar heat-receiving container 39, the heating medium line 40, the heating-exchanging portion 38, and the heating medium line 41 in order.

If the solar heat-receiving container 39 is irradiated with the sunlight 24, the temperature of the heating medium 35 which is circulated in the inner portion of the solar heat-receiving container 39 can be increased by absorbing energy held in the sunlight 24.

Therefore, the heating medium 35, which absorbs energy held in the sunlight 24 at the solar heat-receiving container 39 and is increased in temperature, is sequentially circulated to the heat-exchanging portion 38 installed in the inner portion of the evaporator 36. Thereby, the temperature of the water 37 stored in the inner portion of the evaporator 36 can be increased by heat-exchange with the heating medium 35 which is circulated to the heat-exchanging portion 38 and increased in temperature.

In order to efficiently increase temperature of the heating medium which fills the inner portion of the solar heat-receiving container 39 by using the energy held in the sunlight 24, it is preferable that the area receiving the sunlight 24 be as large as possible in the solar heat-receiving container 39. In addition, the heating medium 35 is not limited to water, and a heating medium having low pressure loss, or one having a high boiling point, and the like are appropriately selected and used.

Except for that, the configuration in FIG 3 is similar to that shown in FIG. 1, and the same reference numbers are associated with the same parts.

When the steam supply apparatus of the present embodiment is used, the solar heat-receiving container 39 of the solar heat-collector 34 is irradiated with the sunlight 24. Thereby, the circulation pump 42 is driven, and temperature of the water 37 stored in the inner portion of the evaporator 36 of the solar heat-collector 34 is increased with the energy held in the irradiated sunlight 24 as the heat source.

In this state, if the high-pressure steam-generating boiler 19 is operated, the steam injector 20 is driven by the steam 27 which is generated by the high-pressure steam-generating boiler 19. If the steam injector 20 is driven, the inner portion of the evaporator 36 of the solar heat-collector 34 is decompressed according to the pressure decrease of the inlet port 20b. If the inner portion of the evaporator 36 of the solar heat-collector 34 is decompressed, even when the water 37 with a temperature increased by the energy held in the sunlight 24 as the heat source is less than 100°C, the water 37 is boiled and evaporated. The low-pressure and low-temperature steam 28 generated at this time is continuously sucked into the inlet port 20b of the steam injector 20.

Therefore, since the low-pressure and low-temperature steam 28 sucked in by the evaporator 36 of the solar heat-collector 34 is mixed with the high-pressure and high-temperature steam 27 from the high-pressure steam-generating boiler 19, the intermediate pressure and intermediate temperature steam 27a which is increased in amount is discharged from the discharging port 20c of the steam injector 20. The steam 27a discharged from the discharging port 20c of the steam injector 20 is supplied to the steam-utilizing equipment 25 through the steam supply line 26.

Therefore, the amount of the steam 27 generated by the high-pressure steam-generating boiler 19 can be decreased to less than the amount of steam required by the steam-utilizing equipment 25. Thereby, similarly to the embodiment shown in FIG 1, fuel consumption of the high-pressure steam-generating boiler 19 can be reduced, and reduction in the operating cost can be improved.

On the other hand, in the case where the irradiation of the sunlight 24 is not present or the irradiation amount of the sunlight 24 is small in the solar heat receiving container 39 of the solar heat-collector 34 due to influences such as the weather, temperature of the heating medium 35 is not sufficiently increased in the solar heat receiving container 39. Thereby, temperature of the water 37 in the inner portion of the evaporator 36 is also not sufficiently increased.

In this case, even when the high-pressure steam-generating boiler 19 is operated and the steam injector 20 is driven by the high-pressure and high-temperature steam 27 supplied from the high-pressure steam-generating boiler 19, boiling and evaporation of water 37 are not sufficiently performed in the inner portion of the evaporator 36 of the solar heat-collector 34 which is decompressed due to the pressure decrease generated at the inlet port 20b. Thereby, the amount of the low-pressure and low-temperature steam 28 which is sucked into the inlet port 20b of the steam injector 20 from the evaporator 36, that is, the amount of the steam 28 which is mixed with the steam 27 supplied from the high-pressure steam-generating boiler 19 in the steam injector 20 is decreased.

Therefore, in this case, in order to supplement the decrease of the low-pressure and low-temperature steam 28 which is sucked into the steam injector 20 from the evaporator 36 of the solar heat-collector 34, the amount of the steam 27 which is generated by the high-pressure steam-generating boiler 19 may be increased by strengthening the operation of the high-pressure steam-generating boiler 19.

Moreover, in the case where irradiation of the sunlight 24 to the solar heat receiving container 39 of the solar heat-collector 34 is not present at all, or in the case where an increase in temperature of the water 37 in the evaporator 36 of the solar heat-collector 34 cannot be expected at all due to the winter season or the like, and boiling and evaporation of water in the evaporator 36 of the solar heat-collector 34 are barely generated even though the steam injector 20 is driven, similarly to the embodiment of FIG. 1, in the state where the shut-off valve 29 on the suction line 23 is closed, the high-pressure steam-generating boiler 19 may be operated so that the entire amount of steam required by the steam-utilizing equipment 25 is supplied by the steam 27 generated by the high-pressure steam-generating boiler 19. Thereby, the steam 27 generated by the high-pressure steam-generating boiler 19 can be supplied with the amount thereof corresponding to the required amount to the steam-utilizing equipment 25, in the state where the pressure and the temperature of the steam 27 are decreased according to the pressure drop when the steam 27 passes through the steam injector 20.

In this way, also according to the present embodiment, effects similar to the effects of the embodiment of FIG. 1 can be obtained.

Moreover, in the steam supply apparatus related to the present embodiment, a solar heat collection function and an evaporation function in the solar heat-collector 34 can be individually allotted to the solar heat-receiving container 39 and the evaporator 36. Therefore, the solar heat-receiving container 39 and the evaporator 36 can be optimally designed for the solar heat collection function and the evaporation function respectively.

Further, since the solar heat-collector 34 is the closed-loop type, water is not directly evaporated in the solar heat-receiving container 39. Thereby, possibility of scale occurrence in the inner portion of the solar heat-receiving container 39 can be prevented, and the place in which the scale may occur can be limited to the evaporator 36. Therefore, since the evaporator 36 is designed so as to simplify the performing of maintenance when responding to the occurrence of scaling in advance, an effect of decreased labor required for maintenance during the occurrence of scaling can be anticipated.

In addition, the present invention is not limited to the above-described embodiments. That is, in the embodiment of FIG. 2, the closed-loop type solar heat-collector 34 shown in FIG. 3 may be used instead of the solar heat-collector 22.

In each embodiment described above, a geothermal heat-collector which collects geothermal heat and increases the temperature of the stored water may be connected to the inlet port 20b of the steam injector 20 instead of the solar heat-collectors 22 and 34. In this case, if the steam injector 20 is driven by the high-pressure and high-temperature steam 27 which is generated by the high-pressure steam-generating boiler 19, water is boiled and evaporated even at normal temperatures in the inner portion of the geothermal heat-collector which is decompressed according to the pressure decrease of the inlet port 20b. Thereby, the steam generated by boiling and evaporation of water in the geothermal heat-collector is introduced to the steam injector 20 and mixed with the high-pressure and high-temperature steam 27 generated by the high-pressure steam-generating boiler 19, and therefore, intermediate pressure and intermediate temperature steam which is increased in amount can be generated.

Moreover, in the case where using the steam injector 20 having a function (performance) in which the pressure of the inlet port 20b can be decreased to a low pressure which causes the water to be boiled and evaporated even at a normal temperature when driven by the high-pressure and high-temperature steam 27 generated by the high-pressure steam-generating boiler 19, a heat-collector of a type in which the heat of the stored water can be exchanged with the heat of the ambient environment such as the ambient air may be connected to the inlet port 20b of the steam injector 20 instead of the solar heat collectors 22 and 34. In this case, if the steam injector 20 is driven by the high-pressure and high-temperature steam 27 generated by the high-pressure steam-generating boiler 19, water is boiled and evaporated even at a normal temperature in the inner portion of the heat-collector which is decompressed according to the pressure decrease of the inlet port 20b. In the heat collector, since the temperature of the water whose heat is lost by the evaporation heat is maintained in the vicinity of a normal temperature through heat-exchange with the heat of the ambient environment, boiling and evaporation of the water can be continuously performed. Thereby, the steam generated by boiling and evaporation of water of a normal temperature in the heat collector is introduced to the steam injector 20 and mixed with the high-pressure and high-temperature steam 27 which is generated by the high-pressure steam-generating boiler 19. Therefore, an effect in which the intermediate pressure and intermediate temperature steam which is increased in amount is generated and can be supplied to the steam-utilizing equipment 25 can be anticipated. Further, configuration of the heat-collector can be made simpler and it can be installed regardless of whether or not irradiation of sunlight is present. Thereby, an effect of a reduction in equipment costs being further improved can also be anticipated.

If the high-pressure steam which can drive the steam injector 20 can be generated in the amount according to the amount of steam required by the steam-utilizing equipment 25, instead of the high-pressure steam-generating boiler 19, any type of steam-generating device such as a device which generates steam through a heat source using electric power, for example, a heater or a heat pump, may be adopted.

It is needless to say that various modifications can be made to the present invention and be within the scope not departing from the gist of the present invention.

### [Working Example]

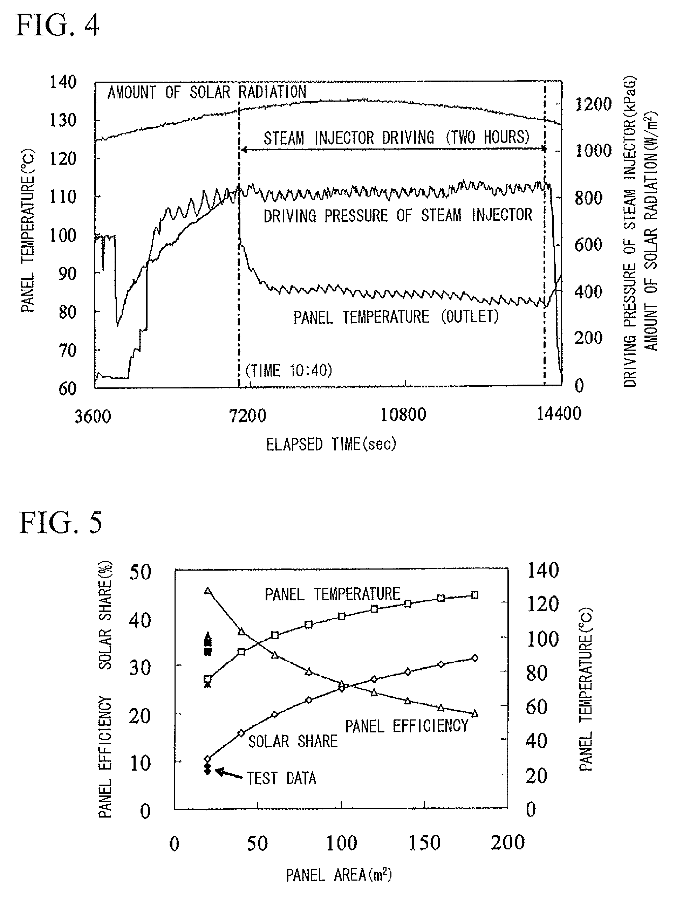

The results of actual operation of the steam supply apparatus of the embodiment shown in FIG. 1 are shown in FIG. 4 as a working example of the present invention. In the steam supply apparatus which is used in operation as the working example, a boiler which burns fossil fuels and generates steam is used as the high-pressure steam-generating boiler 19. The boiler has a performance in which steam of 180°C and 850 kPa is generated. As the solar heat-collector 22, a solar heat-collector of a type which uses a solar thermal collector panel is used. The solar heat 24 is collected by the solar thermal collector panel, and the temperature of water in the inner portion thereof is increased. Accordingly, in the steam supply apparatus which is used in the working example, the temperature of water in the inner portion can be detected by measuring the temperature of the solar thermal collector panel.

In FIG. 4, a horizontal axis represents elapsed time. The elapsed time is represented in seconds, and operation results shown in FIG. 4 represent the results up to three hours after the start of the operation. The left vertical axis represents temperature of the solar thermal collector panel which is used in the solar heat-collector. The right vertical axis represents the driving pressure of the steam injector and amount of solar radiation. The unit of driving pressure of the steam injector is kPaG. The unit of the amount of solar radiation is W/m². The driving pressure of the steam injector means the pressure as output of the boiler.

As shown in FIG. 4, in a position in which the elapsed time shown in the horizontal axis is 3600(sec), that is, in the state before starting the operation, the panel temperature represented about 100°C. On the other hand, the driving pressure of the steam injector was approximately zero. In a position shifted slightly to the right side from 3600(sec) in the elapsed time (after a dozen or so minutes elapsed), if the boiler which is the high-pressure steam-generating boiler 19 is actuated, the driving pressure of the steam injector was dramatically increased to about 600 kPaG. After reaching 600 kPaG, the driving pressure of the steam injector increased gently, representing 850 kPaG at the time when about 2400(sec) had elapsed after actuation of the boiler, and stabilized. The temperature of the panel outlet decreased to the vicinity of 75°C at one time when the boiler was actuated. However, thereafter, the temperature of the panel outlet increased gently to 110°C at the time when the elapsed time was 7200(sec).

At the time when the elapsed time was 7200(sec), the steam injector was driven. The driving of the steam injector means that the shut-off valve 29 is opened and the inner portion of the solar heat-collector 22 is decompressed.

If the steam injector is driven, according to the decompression of the inner portion of the solar heat-collector 22, the boiling point of the water stored in the inner portion is decreased and the temperature of the water is decreased. In the working example, the boiling point of the water was decreased by the driving of the steam injector, and the temperature of the water which could be detected from the panel temperature was decreased to about 80°C. After the temperature of the water was decreased to about 80°C, the temperature was stabilized. In the working example, a substantially constant temperature of the water was showed during the approximately two hours in which the steam injector was driven. The driving pressure of the steam injector was substantially constant during the two hours from the start of driving the steam injector to the operation stop of the steam supply apparatus, and continuously represented about 850 kPaG in the pressure.

As shown in FIG. 4, in the steam supply apparatus related to the present invention, the driving pressure of the steam injector and the panel temperature (water temperature) all represented a substantially constant value during the driving of the steam injector. Thereby, it was demonstrated that the steam supply apparatus related to the present invention represented considerably stabilized output characteristics.

Next, based on the steam supply apparatus which is used in the working example shown in FIG. 4, results of a performance simulation of the steam supply apparatus are shown in FIG. 5 as a working example of the steam supply apparatus related to the present invention.

The simulation was performed so as to predict the performance of the supply apparatus when size of the boiler for generating the high-pressure steam is constant and the area of the solar thermal collector panel included in the solar heat-collector is changed. The performance of the steam supply apparatus was evaluated in triplicate such as panel efficiency, a solar share, and a panel temperature.
The panel efficiency means a ratio of energy which is converted to energy of steam 28 so as to be effectively used in energy of the solar heat 24 which irradiates the solar heat-collector 22.
The solar share means a ratio of the steam 28 generated by the solar heat-collector 22 which accounts for the steam 27a discharged from the steam injector.
The panel temperature means the temperature of the solar thermal collector panel which is included in the solar heat-collector 22.

In FIG. 5, the left vertical axis represents the panel efficiency and the solar share. Moreover, in FIG. 5, the right vertical axis represents the panel temperature. The horizontal axis of FIG. 5 represents the panel area. In FIG. 5, a square symbol represents the panel temperature. A triangle symbol represents the panel efficiency. A diamond symbol represents the solar share. Moreover, in all of the panel temperature, the panel efficiency, and the solar share, black symbols represent actual test data results, and white symbols represent simulation results.

If the panel area is small, the panel efficiency is high and the solar share is low. For example, under conditions of 20 m², which is the minimum panel area assumed in the simulation range, the solar share is about 10% while the panel efficiency is about 46%. However, as the panel area is increased, the panel efficiency is decreased and the solar share is increased. For example, under conditions of 180 m², which is a maximum panel area in the simulation range, the panel efficiency is decreased to about 20%. However, the solar share is increased to about 30%. The reason is as follows. That is, since the decompression amount due to the driving of the steam injector is constant under conditions in which the size of the boiler is constant and the same steam injector is used, if the panel area is increased, the effect of the decompression amount due to the driving of the steam injector is decreased. However, if the panel area is increased, the amount of the water stored in the inner portion is also increased, and the amount of the steam 28 sucked into the steam injector is increased. Thereby, the solar share is increased according to the increase of the panel area.
The panel temperature is increased according to the increase of the panel area.

In FIG. 5, in the actually measured values represented by the black symbols, the value of the solar share is close to the simulation results. However, the test data of the panel temperature represents higher values than the simulation results, and the test data of the panel efficiency represents lower values than the simulation results. This is considered to be because the amount of the water stored in the solar heat-collector is insufficient with respect to amount of the steam 28 which can be generated in the solar heat-collector through the driving of the steam injector and drying-out occurs in the solar heat-collector. It is considered that both the panel temperature and the panel efficiency are close to the simulation results by storing a proper amount of water in the solar heat-collector in order to prevent the drying-out.

As shown in FIG. 5 described above, in the steam supply apparatus related to the present invention, it can be understood that the operation conditions can be appropriately set according to the steam condition required by the steam-utilizing equipment 25, or the fuel consumption or the operating cost required by the boiler by changing the panel area of the solar heat-collector 22.

### [Industrial applicability]

In the steam supply apparatus related to the present invention, the amount of steam which is generated by the steam-generating device can be smaller than the amount of steam which is required by the steam-utilizing equipment. In addition, when the amount of steam generated in the heat-collector is decreased due to influences such as the weather, the entire required amount of steam can be easily supplied by increasing the amount of steam generated by the steam-generating device. Thereby, even at factories and buildings in which exhaust heat to be used in steam generation is not generated, it is possible to supply the steam (process steam) of pressure and temperature matching predetermined pressure and temperature conditions which are required by the steam-utilizing equipment by the required amount without being affected by natural conditions such as the weather. Therefore, a reduction in equipment costs or operating costs can be improved.

### [Description of the Reference Numerals]

- 19:: high-pressure steam-generating boiler (steam-generating device)
- 19a:: steam outlet
- 20:: steam injector
- 20a:: steam inlet
- 20b:: inlet port
- 20c:: discharging port
- 22:: solar heat-collector (heat-collector)
- 25:: steam-utilizing equipment
- 27, 27a:: steam
- 28:: steam
- 34:: solar heat-collector
- 35:: heating medium
- 36:: evaporator
- 37:: water

## Claims

1. A steam supply apparatus comprising:
a steam-generating device;
a steam injector in which a steam inlet is connected to a steam outlet of the steam-generating device;
a heat-collector which is connected to an inlet port of the steam injector, stores water therein, and increases the temperature of the water by natural energy; and
steam-utilizing equipment which is connected to a discharging port of the steam injector,
wherein the steam injector is driven by steam which is generated by the steam-generating device,
pressure in the heat-collector is decreased by driving the steam injector and steam is generated in the heat-collector, and
steam which is supplied from the steam-generating device and steam which is generated in the heat-collector are mixed by the steam injector and supplied to the steam-utilizing equipment.

2. The steam supply apparatus according to Claim 1,
wherein the steam-generating device has a capability to supply an entire amount of steam required by the steam-utilizing equipment.

3. The steam supply apparatus according to Claim 1 or 2,
wherein the steam-generating device is a high-pressure steam-generating boiler.

4. The steam supply apparatus according to Claim 1 or 2,
wherein the heat-collector is a solar heat-collector.

5. The steam supply apparatus according to Claim 3,
wherein the heat-collector is a solar heat-collector.

6. The steam supply apparatus according to Claim 4,
wherein the solar heat-collector is a closed-loop type which circulates a heating medium whose temperature is increased by absorbing solar heat, and the temperature of water stored in an inner portion of the solar heat-collector is increased by circulating the heating medium.

7. The steam supply apparatus according to Claim 5,
wherein the solar heat-collector is a closed-loop type which circulates a heating medium whose temperature is increased by absorbing solar heat, and the temperature of water stored in an inner portion of the solar heat-collector is increased by circulating the heating medium.
